(19) Europäisches Patentamt

European Patent Office

Office européen des brevets

(11) **EP 0 842 793 A1**

(12) **EUROPEAN PATENT APPLICATION**
published in accordance with Art. 158(3) EPC

(43) Date of publication:
20.05.1998 Bulletin 1998/21

(51) Int. Cl.$^6$: **B60C 5/14**, B60C 1/00

(21) Application number: 97920944.2

(86) International application number:
PCT/JP97/01568

(22) Date of filing: 09.05.1997

(87) International publication number:
WO 97/43136 (20.11.1997 Gazette 1997/50)

(84) Designated Contracting States:
DE FR

(30) Priority: 14.05.1996 JP 119198/96
24.03.1997 JP 70158/97
30.04.1997 JP 112600/97

(71) Applicant:
THE YOKOHAMA RUBBER CO., LTD.
Tokyo, 105 (JP)

(72) Inventors:
• HASHIMURA, Yoshiaki,
The Yokohama Rubber Co., Ltd.
Hiratsuka-shi, Kanagawa 254 (JP)

• SHIDA, Zenichiro,
The Yokohama Rubber Co., Ltd.
Hiratsuka-shi, Kanagawa 254 (JP)
• HIGUCHI, Tadashi,
The Yokohama Rubber Co., Ltd.
Hiratsuka-shi, Kanagawa 254 (JP)

(74) Representative:
Hansen, Bernd, Dr. Dipl.-Chem. et al
Hoffmann Eitle,
Patent- und Rechtsanwälte,
Arabellastrasse 4
81925 München (DE)

(54) **PNEUMATIC TYRE**

(57) A pneumatic tyre which comprises an air permeation preventive layer substantially covering a tyre inner surface and formed of a film of a thermoplastic resin having an air permeability coefficient of at most $25 \times 10^{-12}$ [cc.cm/cm$^2$.sec.cmHg] or a thermoplastic elastomer composition containing a blend of the thermoplastic resin and an elastomer, and is constructed such that a rubber finishing layer is provided to interpose the air permeation preventive layer between it and a tyre carcass layer or a film is interposed between the tyre carcass layer and a finishing layer in a bead portion. At least a part of the film interposed between the tyre carcass layer and the finishing layer is cut out to permit portions of the tyre carcass layer and the finishing layer to directly contact with each other or an amount of lap between the finishing layer and the film is at most 10 mm.

Fig. 1

## Description

### TECHNICAL FIELD

The present invention relates to a pneumatic tire having, as an air permeation preventive layer, a resin film comprising a thermoplastic resin as a main ingredient. More particularly, it relates to a pneumatic tire which uses, as an air permeation preventive layer, a film of a thermoplastic elastomer composition having an air permeation coefficient of not more than $25 \times 10^{-12}$ ($cc \cdot cm/cm^2 \cdot sec \cdot cmHg$) or a blend of a thermoplastic resin and an elastomer, does not suffer from trouble in manufacture, does not impair the protection of the bead portion by a finishing layer, and helps to lighten the weight of the tire or a light weight pneumatic tire with a good productivity which is structured with a film between a carcass layer and a finishing layer at the bead portion, does not impair the resistance to air leakage or rolling resistance, and prevents peeling at the film layer between the finishing layer and the carcass layer after vulcanization.

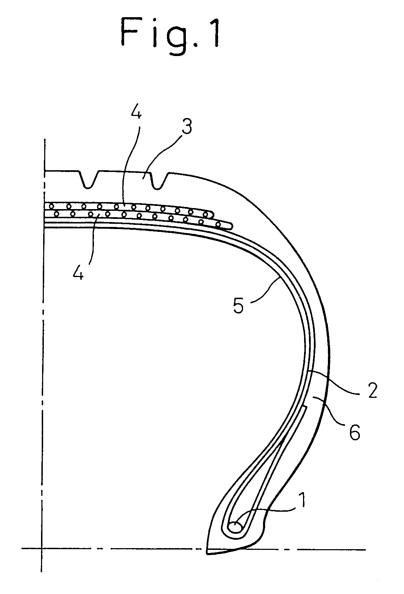

A pneumatic tire, as shown in Fig. 1, in general is comprised of a pair of left and right bead core portions 1 and 1, between which is attached a carcass layer 2 and has a tread portion 3 at which two belt layers 4 and 4 are arranged over a circumference of the tire. At the inside wall surface of the tire, a resin film mainly composed of a thermoplastic resin is adhered to form an air permeation preventive layer 5 substantially covering the inside surface of the carcass layer 2. Reference numeral 6 is a side wall portion.

### BACKGROUND ART

In the past, when using a halogenated butyl rubber as the air permeation preventive material of the tire, if directly adhered to the carcass, the rolling resistance deteriorates since the butyl rubber with its large hysteresis loss invades the spaces between the carcass cords. When tie rubber is inserted, the thickness of the layer as a whole becomes 1 mm or more, and therefore, there is the problem that the weight of the tire increases.

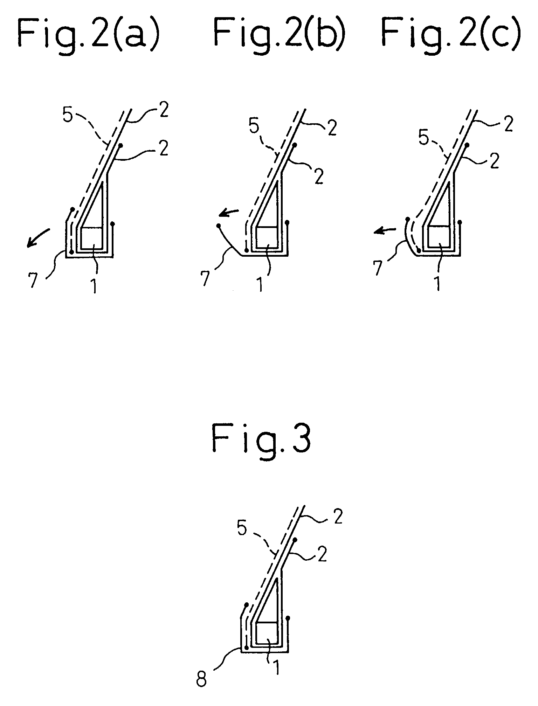

Therefore, it was proposed to use a film having a low air permeation property to reduce the thickness and lighten the weight compared with butyl rubber (for example, see Japanese Unexamined Patent Publication (Kokai) No. 5-329961, Japanese Patent Application No. 8-119198, etc.) With the conventional tire structure, however, if an air permeation preventive layer 5 composed simply of butyl rubber is used instead of the film and a textile finishing layer obtained by rubberizing a cord of nylon or the like (hereinafter referred to as a textile finishing layer) is used as the finishing layer, a force acts restoring a bent finishing layer 7 to its original shape (see arrow in Fig. 2(a)) and, since there is no strong tackiness such as rubber in the film before vulcanization and since, for example, the heat at the time of vulcanization causes gas to be generated from the film layer, the film has a lower melting point than rubber, and high temperature strength cannot be obtained, the manufacturing problems will occur that the finishing layer 7 will peel from the film 5 at the time of shaping the tire (see Fig. 2(b)) and the film 5 and carcass layer 2 will end up peeling apart (see Fig. 2(c)). Of course, if the finishing layer 7 is removed, the problem of the peeling at the time of shaping can be avoided, but the finishing layer 7 has the function of protecting the bead portion and sealing the bead portion when the tire is assembled on the rim, and therefore, it is not possible to remove this from the tire structure.

### DISCLOSURE OF THE INVENTION

Accordingly, the objects of the present invention are to solve the above-mentioned problems of conventional pneumatic tires and to provide a pneumatic tire which is free from the problems of trouble during manufacture, does not impair the protection of the bead portion by the finishing layer, and can lighten the weight of the tire.

The further object of the present invention is to provide a light weight pneumatic tire with a good productivity which does not impair the resistance to air leakage or rolling resistance and prevents peeling at the film layer between the vulcanized finishing layer and carcass layer.

In accordance with to the present invention, there is provided a pneumatic tire having an air permeation preventive layer comprising a film of a thermoplastic elastomer composition having an air permeation coefficient of not more than $25 \times 10^{-12}$ ($cc \cdot cm/cm^2 \cdot sec \cdot cmHg$) and containing a thermoplastic resin or a blend of a thermoplastic resin and an elastomer and substantially covering the inner surface of the tire and arranging the air permeation preventive layer at the outside of the finishing layer; a pneumatic tire using a rubber finishing layer; a pneumatic tire using a textile finishing layer with a small cord denier or count; a pneumatic tire with an air permeation preventive layer wrapped inside or wrapped up the bead core; a pneumatic tire structured with the air permeation preventive layer and a finishing layer not overlapping; and a pneumatic tire with a tackifier/adhesive coated between the air permeation preventive layer and its adjoining layer.

In accordance with the present invention, there is also provided a pneumatic tire having, as for an air permeation preventive layer, a film of a thermoplastic elastomer composition comprising a thermoplastic resin composition having an air permeation coefficient of not more than $25 \times 10^{-12}$ ($cc \cdot cm/cm^2 \cdot sec \cdot cmHg$) and containing a thermoplastic resin or a blend of a thermoplastic resin and an elastomer and structured with a film sandwiched between a carcass layer and a finishing layer in the bead portion, wherein said pneumatic tire has a portion where at least a part of the film sandwiched between the carcass layer and a finishing layer cut away and where the finishing layer and the carcass layer are directly bonded.

In accordance with the present invention, there is further provided a pneumatic tire having, as an air permeation preventive layer, a film of a thermoplastic elastomer composition having an air permeation coefficient of not more than $25 \times 10^{-12}$ (cc $\cdot$ cm/cm$^2$ $\cdot$ sec $\cdot$ cmHg) and containing a thermoplastic resin or a blend of a thermoplastic resin and an elastomer and structured with a film sandwiched between a carcass layer and a finishing layer in the bead portion, wherein the amount of overlap of the finishing layer and the film is not more than 10 mm.

BRIEF DESCRIPTION OF THE DRAWINGS

The present invention will now be explained in further detail with reference to the drawings, wherein

Figure 1 is a schematic semisectional explanatory view along the meridional direction of an example of a pneumatic tire;

Figures 2(a), 2(b), and 2(c) are views of the arrangement of the conventional finishing layer protecting the bead portion of a conventional pneumatic tire and the problems in the same;

Figure 3 is a view of a first embodiment of a pneumatic tire of the present invention, wherein use is made of a textile finishing layer with a cover factor A larger than 0 and not more than 1000 or a rubber finishing layer as a finishing layer;

Figure 4 is a view of another embodiment of a pneumatic tire of the present invention, structured so that a finishing layer is sandwiched between the air permeation prevention layer and the carcass layer;

Figure 5 is a view of another embodiment of a pneumatic tire of the present invention, structured so that provision is made of an inside finishing layer and an outside rubber finishing layer;

Figure 6 is a view of another embodiment of a pneumatic tire of the present invention, structured so that the end portion of the air permeation preventive layer is positioned higher than the bead toe portion;

Figure 7 is a view of a pneumatic tire of a comparative example, structured so that the air permeation preventive layer is wrapped back to the outside from the bead toe portion;

Figures 8(a), 8(b), 8(c), and 8(d) are views of the shapes of the cutaways of the end portion of the air permeation preventive layer of the present invention in the circumferential direction, showing four types of variations (a), (b), (c), and (d);

Figure 9 is a view of another embodiment of a pneumatic tire of the present invention, structured so that an edge of the air permeation preventive layer 5 in the radial direction is arranged at the bead heel portion 11 and arranged at the inside of the bead core portion 1 in the diametrical direction;

Figure 10 is a view of another embodiment of a pneumatic tire of the present invention, structured so that the air permeation preventive layer 5 is wrapped up at the bead core 1 and the wrap up height from the bead heel portion 11 is h;

Figure 11 is a view of another embodiment of a pneumatic tire of the present invention, structured so that the bottom end of the air permeation preventive layer 5 is stopped at a position of a height ht from the bead toe portion 9 and does not overlap the finishing layer;

Figure 12 is a view of another embodiment of a pneumatic tire of the present invention, wherein the air permeation preventive layer is arranged at the inside of the carcass layer;

Figure 13 is a view of another embodiment of a pneumatic tire of the present invention, wherein the air permeation preventive layer is arranged at the inside of the carcass layer;

Figure 14 is a view of another embodiment of a pneumatic tire of the present invention, wherein the air permeation preventive layer is arranged at the inside of the carcass layer;

Figure 15 is a view of another embodiment of a pneumatic tire of the present invention, wherein the air permeation preventive layer is arranged at the inside of the carcass layer;

Figure 16 is a view of the structure of the cutaway portions of the air permeation preventive layer film according to the present invention and the overlapping region with the finishing layer;

Figures 17(a) and 17(b) are other views of the structure of the cutaway portions of the air permeation preventive layer film according to the present invention and the overlapping region with the finishing layer;

Figures 18(a), 18(b), and 18(c) are other views of the structure of the cutaway portions of the air permeation preventive layer film according to the present invention and the overlapping region with the finishing layer, wherein the cutaways protrude from the overlapping region of the finishing layer;

Figures 19(a), 19(b), 19(c), 19(d), 19(e), and 19(f) are views of various shapes of the cutaway portions of the air permeation preventive layer film according to the present invention; and

Figures 20(a) and 20(b) are views of a second embodiment of the air permeation preventive layer according to the present invention, structured so that there is little overlap between the finishing layer and the film.

BEST MODE FOR CARRYING OUT THE INVENTION

The present invention will now be explained in further detail with reference to the drawings.

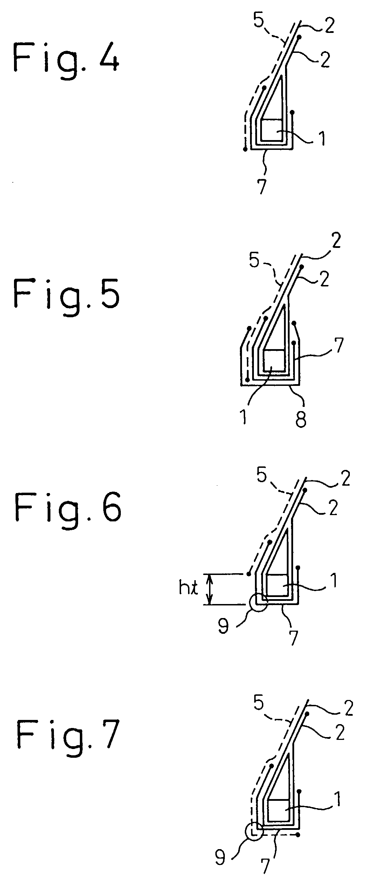

Figure 1 is a semi-sectional view along the meridional direction illustrating a typical example of a pneumatic tire. In Fig. 1, a carcass layer 2 is attached between a pair of left and right bead cores 1 and 1. An air permeation preventive layer 5 is provided at the inside surface of the tire at the inside of the carcass layer 2. The air permeation preventive layer 5, in the present invention, is comprised of a film of a thermoplastic elastomer composition having a specific air permeation coefficient. Note that the position of the air permeation preventive layer 5 is not necessarily limited to this position. In Fig. 1, 4 is a belt layer and 6 is a side wall portion.

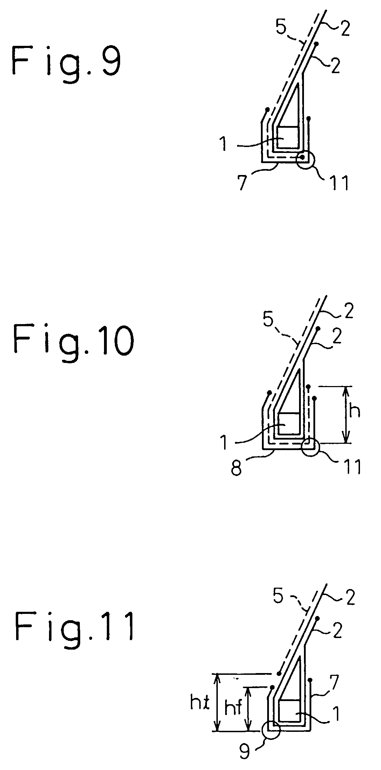

According to a first embodiment of the present invention, as illustrated for example in Fig. 3, a film of a thermoplastic elastomer composition containing a thermoplastic resin with a smaller air permeation property than conventional butyl rubber or a blend of the thermplastic resin and elastomer is used for the air permeation preventive layer 5 so as to maintain the performance of the resistance to air leakage at least at that of butyl rubber and, instead of a conventional textile finishing layer using a cord of nylon or the like, the air permeation preventive layer 5 is sandwiched between a finishing layer made of rubber (hereinafter referred to as a rubber finishing layer) 8 and the carcass layer 2. As the rubber finishing, a rubber composition comprising a diene family rubber (for example, natural rubber, polyisoprene rubber, styrene-butadiene rubber, styrene-butadiene copolymer rubber, polybutadiene rubber (high cis BR and low cis BR), etc. to which carbon black, process oil, a vulcanisation agent, or other compounding agent is added may be illustrated. Note that the air permeation preventive layer 5 may be wrapped up at the bead core 1 as shown in the later mentioned Fig. 10.

The conventional textile finishing layer has the problem that the actual contact area becomes smaller due to the unevenness of the surface caused by the yarn of the cord, but a rubber finishing layer has a smooth surface, so the actual contact area becomes larger and an effective bonding force can be exhibited. In this respect, it is much more advantageous than a conventional textile finishing layer.

According to a second embodiment of the present invention, there is provided a pneumatic tire of the structure shown in the above Fig. 3 having an air permeation preventive layer 5 comprised of a film of a thermoplastic elastomer composition containing a thermoplastic resin with an air permeation coefficient of not more than $25 \times 10^{-12}$ ($cc \cdot cm/cm^2 \cdot sec \cdot cmHg$) or a blend of the thermoplastic resin and an elastomer and substantially covering the inner surface of the tire and arranging a textile finishing layer having a cover factor A, defined as in the following equation, larger than 0 and not more than 1000 so as to sandwich the air permeation preventive layer 5 with the tire carcass layer 2.

$$A = \text{(Average denier number of cord contained in textile finishing layer)}^{0.5}$$
$$\times \text{(average cord count per 50 mm width of textile finishing layer)}$$

If the value of the cover factor A exceeds 1000, the force trying to restore the bent finishing layer 7 to its original shape becomes larger and as a result as stated above the film 5 ends up peeling, so this is not preferred.

Further, according to a third embodiment of the present invention, by adopting a structure where a finishing layer 7 comprised by a rubber or a textile which is rubberized is arranged at the inside of the bead portion 1 of the air permeation preventive layer 5, for example, as shown in Fig. 4, the finishing layer 7 is made to directly contact the tire carcass layer 2, so the finishing layer 7 is influenced by the air permeation preventive layer 5 and will not peel from the carcass layer 2. Further, it is possible to add at the outermost layer of the bead portion, as shown in Fig. 5, a rubber finishing or textile finishing with a cover factor A of 0 to 1000. In this case as well, the air permeation preventive layer 5 may be wrapped up at the bead core 1 as shown in the later mentioned Fig. 10. Further, as the cord used for the textile finishing layer, a nylon, vinylon, polyester, or other organic fiber may be used, but use of a nylon cord is preferred. The same is true in the case of the above second embodiment as well.

Further, for example, as Fig. 6, according to the third embodiment of the present invention, by making the ratio of the height ht of the end portion of the air permeation preventive layer 5 measured in the tire diametrical direction from the bead toe portion 9 with respect to the tire sectional height SH 0 to 30%, preferably 0 to 25%, it is possible to obtain a lighter weight tire without detracting from the object of protecting the bead portion without causing trouble in manufacture and possible to make the cutaway shape of the film end portion various shapes as well. Note that if the ratio of ht/SH is over 30%, the resistance to air leakage deteriorates and is no longer practical. In this embodiment, further, it is preferable that the position of the lower end of the air permeation preventive layer 5 is one where ht is at least 2 mm, more preferably at least 5 mm, and lower than the upper end of the bead filler. Further, it is preferable that ht be at least 5 mm and not more than 1/2 of the height of the bead filler.

Figure 7 is a view of the case where the air permeation preventive layer 5 is wrapped back to the outside from the bead toe portion 9. With this, at the time of assembly to a rim, the air permeation preventive layer 5 will be damaged, the frictional coefficient between the film and rim will become smaller than that between the rubber and rim resulting in easy slipping, and rim deviation or rim detachment will occur - making it not practical.

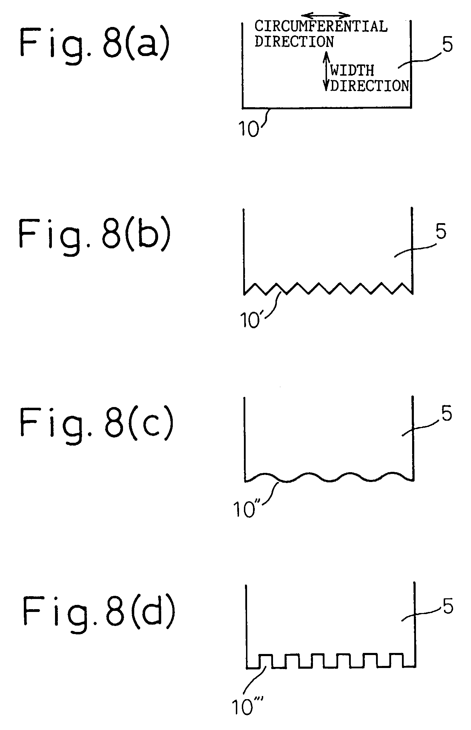

Further, as explained above, in this embodiment of the present invention, it is possible to make the cutaway shape 10 of the end portion of the air permeation preventive layer 5 any shape from for example the conventional general straight shape (Fig. 8(a)) such as the sawtooth shape 10' shown in Fig. 8(b), the wave shape 10" shown in Fig. 8(c), and the uneven shape 10'" shown in Fig. 8(d), improve the tire appearance, and hold down wrinkles occurring in the circumferential direction at the time of bead arrangement.

Further, as shown in Fig. 9, by structuring the tire so that the air permeation preventive layer 5 is wrapped inside up to the bottom of the bead core, mechanical peeling is prevented, and therefore, it is possible to use a textile finishing layer. In this case, as shown in Fig. 9, even if the tire is structured with it wrapped into the bead heel portion 11, it may be stopped at the bottom of the bead core 1 midway.

Further, as shown in Fig. 10, the tire may be structured with the air permeation preventive layer 5 wrapped up at the bead core 1. In this case, however, if wrapped up excessively, trouble occurs due to folding back at the time of shaping, so the wrap up height h is up to about 25 mm from the bead heel portion 11. Further, in this case, the finishing layer must be a rubber finishing layer.

Further, according to another embodiment of the present invention, there is provided a structure with a portion where the air permeation preventive layer and the finishing layer overlap in the radial direction where a tackifier/adhesive is coated at part of at least one of the air permeation preventive layer and its adjoining layer so as to increase the bonding force of the coated portion and make possible use of not only a rubber finishing layer, but also a textile finishing layer. The structure is optional as well.

According to still another embodiment of the present invention, for example, as shown in Fig. 11, the tire may also be structured so that there is no overlap between the bottom end of the film 5 and the finishing layer 7. In this case, if the height ht of the bottom end of the film 5 from the bead toe portion 9 measured in the tire diametrical direction is over 30%, the performance in the resistance to air leakage is insufficient, so it is necessary to make the ratio of ht to SH not more than 30%.

In these cases, since there is no air permeation preventive layer having a relatively small tackiness between the carcass and finishing layer and the peeling of the finishing layer is mechanically suppressed, it is also possible to use a finishing layer with a greater cord count than the conventionally used finishing layer, for example, a finishing layer with a cover factor A of 1500.

Further, as the method of weaving the cord of the textile finishing layer of the present invention, for example, a flat weave, leno weave, twill weave, satin weave, basket weave, etc. may be mentioned.

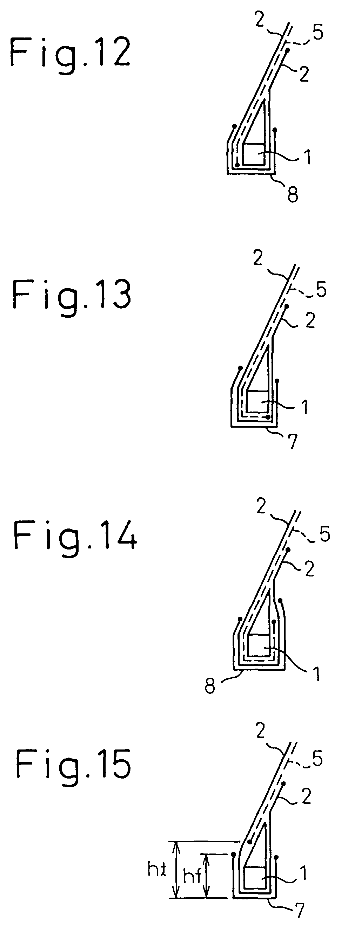

These tires, as in conventional tires, have the air permeation preventive layer arranged at the inner side from the carcass layer, but the air permeation preventive layer may be also arranged at the outer side from the carcass layer (see Fig. 12, Fig. 13, Fig. 14, and Fig. 15).

In the first aspect of the present invention, portions are provided where "cutaways" etc. are provided at the film portion sandwiched between the carcass layer and the finishing layer at the bead portion and where the carcass layer and finishing layer are directly bonded so as to cause the carcass layer and finishing layer to strongly bond at that portion and thereby to effectively prevent peeling of the film layer.

In another embodiment of the second aspect of the present invention, it is possible to effectively prevent peeling of the film layer in a pneumatic tire structured with a film sandwiched between the carcass layer and finishing layer by making the overlap between the finishing layer and the film layer not more than 10 mm.

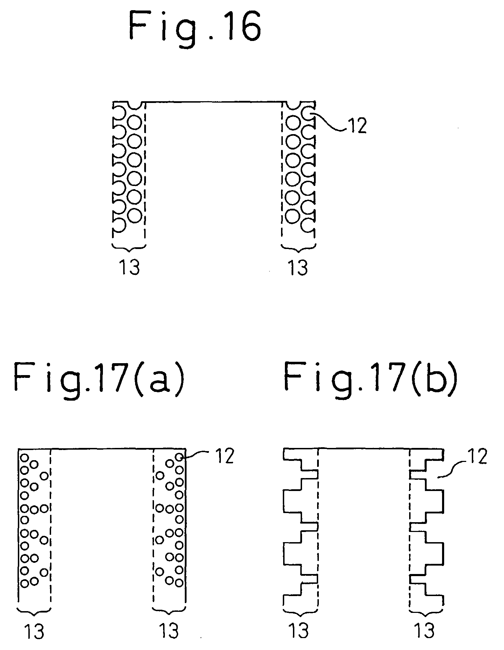

As shown in Fig. 16 and in Figs. 17(a) and 17(b), the cutaways 12 of the film between the finishing layer and the carcass layer in one embodiment of the present invention may be made cutaways 12 formed by at least pricking so the finishing layer will not peel off. If the average cutaway rate per unit area is more than at least 5% of the area of the overlap of the finishing layer and film, peeling is suppressed. Over 30% is even more preferable. If the cutaway rate conversely exceeds 80%, while shaping may be possible, the film loses "stiffness", so the guide mechanism of the shaping machine no longer will work normally and centering will become difficult, and therefore the average cutaway rate per unit area of the film is preferably made not more than 80%.

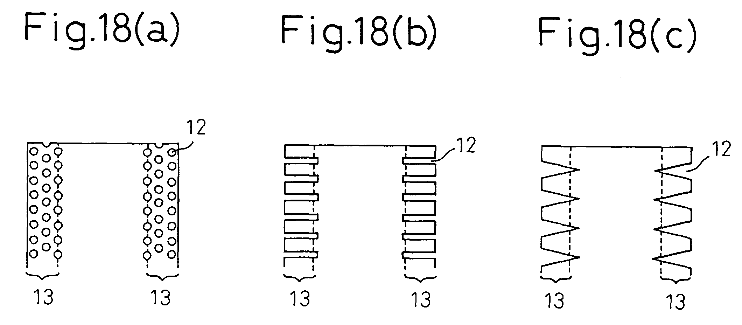

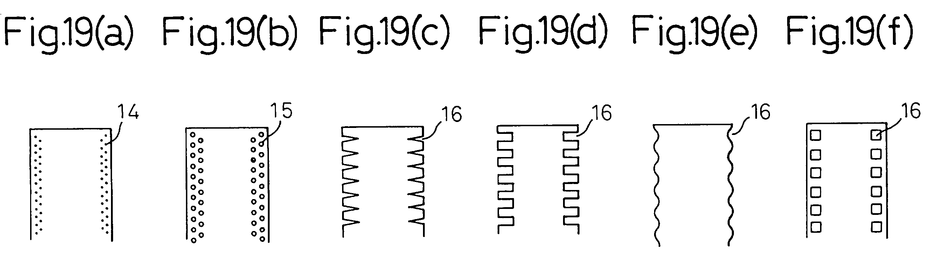

Considering the bondability of the finishing layer and the carcass layer, the cutaway portions 12 may be distributed uniformly or may be concentrated as shown in Figs. 17(a) and 17(b). The cutaways 12 are preferably present in the region sandwiched between the finishing layer and the carcass layer, but as shown in Figs. 18(a), 18(b), and 18(c), the cutaways 12 may be higher than the region 13 overlapping with the finishing layer (may be protruding). Further, when the cutaways 12 protrude out, if the area of the protruded cutaways is within 15% of the area of the inside surface of the tire, there is no problem in the resistance to air leakage. If over 15%, however, the resistance to air leakage is liable to fall. As shown in Figs. 19(a) and Fig. 19(b), the shape of the cutaways of the film may be various shapes such as prickings 14, any shape of hole 15, and cutaways 16 as shown in Figs. 19(c), 19(d), 19(e), and 19(f) and is not particularly limited.

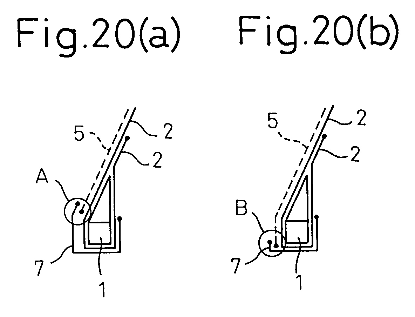

Further, as shown in Figs. 20(a) and 20(b), the structure may be one with little overlap of the finishing layer 7 and film 5. At this time, if the amount of overlap of the finishing layer 7 and the film 5 is less than 10 mm, the gas generated easily escapes from the top end of the finishing layer and the absolute amount of the generated gas becomes smaller as well, and therefore this is effective. An overlap of the finishing layer 7 and the film 5 is more preferably not more than 5 mm. Note that the amount of overlap of the finishing layer 7 and the film 5 is not more than 10 mm and cutaways may be made in the film 5. As the structure with less of an overlap, it is possible to make the width of the film 5 narrower as shown by A in Fig. 20(a) or to reduce the height from the bead toe portion of the finishing layer 7 as shown by B in Fig. 20(b).

Note that in the present invention, the above embodiment was explained with reference to an example of arrangement of two belt layers 4, but it is not limited to this. Even one with a plurality of belt layers, such as three or more belt layers, may be suitably used.

The film constituting the air permeation preventive layer of the pneumatic tire according to the present invention has an air permeation coefficient of not more than $25 \times 10^{-12}$ cc $\cdot$ cm/cm$^2$ $\cdot$ sec $\cdot$ cmHg or less, preferably not more than $5 \times 10^{-12}$ cc $\cdot$ cm/cm$^2$ $\cdot$ sec $\cdot$ cmHg, a Young's modulus of 1 to 500 MPa, preferably 10 to 300 MPa, and a thickness of the film of preferably not less than 0.02 mm from the viewpoint of the shapeability, preferably not more than 1.1 mm from the viewpoint of the weight reduction, more preferably 0.05 to 0.2 mm. An air permeation coefficient exceeding $25 \times 10^{-12}$ cc $\cdot$ cm/cm$^2$ $\cdot$ sec $\cdot$ cmHg is not preferable in view of lightening the weight of the pneumatic tire. Further, if the Young's modulus is too low, wrinkles etc. occur at the time of shaping the tire and as a result the shapeability falls, while conversely if too high, problems arise in durability.

As the material constituting the film of the thermoplastic elastomer composition including a thermoplastic resin or a blend of a thermoplastic resin and elastomer used in the present invention, it is possible to use any material having an air permeation prevention action. As such a thermoplastic resin, a thermoplastic resin such as the following for example may be mentioned:

Polyamide resins (for example, nylon 6 (N6), nylon 66 (N66), nylon 46 (N46), nylon 11 (N11), nylon 12 (N12), nylon 610 (N610), nylon 612 (N612), nylon 6/66 copolymer (N6/66), nylon 6/66/610 copolymer (N6/66/610), nylon MXD6 (MXD6), nylon 6T, nylon 6/6T copolymer, nylon 66/PP copolymer, nylon 66/PPS copolymer), and their N-alkoxyalkylates, for example, a methoxymethylate of 6-nylon, a methoxymethylate of 6-610-nylon, a methoxymethylate of 612-nylon, polyester resins (for example, polybutylene terephthalate (PET), polyethylene isophthlate (PEI), PET/PEI copolymer, polyacrylate (PAR), polybutylene naphthalate (PBN), liquid crystal polyester, polyoxyalkylene diimidic acid/polybutylene terephthlate copolymer, and other aromatic polyesters), polynitrile resins (for example, polyacrylonitrile (PAN), polymethacrylonitrile, acrylonitrile/styrene copolymer (AS), methacrylonitrile/ styrene copolyer, methacrylonitrile/styrene/butadiene copolymer), polymethacrylate resins (for example, polymethyl methacrylate (PMMA), polyethyl methacrylate), polyvinyl resins (for example, vinyl acetate, polyvinyl alcohol (PVA), vinyl alcohol/ethylene copolymer (EVOH), polyvinylidene chloride (PDVC), polyvinyl chloride (PVC), vinyl chloride/vinylidene chloride copolymer, vinylidene chloride/methyl acrylate copolymer, vinylidene chloride/acrylonitrile copolymer), cellulose resins (for example, cellulose acetate and cellulose acetate butyrate), fluorine resins (for example, polyvinylidene fluoride (PVDF), polyvinyl fluoride (PVF), polychlorofluoroethylene (PCTFE), tetrafluoroethylene/ethylene copolymer), imide resins (for example, aromatic polyimide (PI)), etc.

Further, the thermoplastic elastomer composition including the blend of the above thermoplastic resin and elastomer may be comprised by mixing an elastomer in the above-mentioned thermoplastic resin. The types and ratio of mixture of the materials are not limited so long as there is an air permeation preventive action.

As the elastomer which may be blended with the above thermoplastic resin, it is possible to mention for example the following:

Diene rubbers and the hydrates thereof (for example, NR, IR, epoxylated natural rubber, SBR, BR (high cis BR and low cis BR), NBR, hydrogenated NBR, hydrogenated SBR), olefin rubbers (for example, ethylene propylene rubber (EPDM, EPM), maleic acid modified ethylene propylene rubber (M-EPM), IIR, an isobutylene and aromatic vinyl or diene monomer copolymer, acryl rubber (ACM), ionomer), halogen-containing rubbers (for example, Br-IIR, C1-IIR, a bromide of isobutylene paramethylstyrene copolymer (Br-IPMS), chloroprene rubber (CR), hydrin rubber (CHR), chlorosulfonated polyethylene (CSM), chlorinated polyethylene (CM), maleic acid modified chlorinated polyethylene (M-CM)), silicone rubbers (for example, methylvinyl silicone rubber, dimethyl silicone rubber, dimethyl silicone rubber, methylphenylvinyl silicone rubber), sulfur-containing rubbers (for example, polysulfide rubber), fluorine rubbers (for example, vinylidene fluoride rubber, fluorine containing vinyl ether rubber, tetrafluoro-ethylene-propylene rubber, fluorine-containing silicone rubber, fluorine-containing phosphagen-family rubber), thermoplastic elastomers (for example, styrene elastomer, olefin elastomer, ester elastomer, urethane elastomer, polyamide elastomer), etc. may be mentioned.

The process of production of the thermoplastic elastomer comprises melt kneading the thermoplastic resin component and the elastomer component (in the case of a rubber, unvulcanized) in advance by a twin-screw kneader/extruder etc. to cause the elastomer component to disperse as a dispersed phase (domain) in the thermoplastic resin forming the continuous phase (matrix). When vulcanizing the elastomer component, it is also possible to add the vulcanization agent while kneading and cause the elastomer component to dynamically vulcanize. Further, the various compounding agents (except the vulcanization agent) for the thermoplastic resin or elastomer component may be added during the above kneading, but preferably are premixed before the kneading. The kneader used for the kneading of the thermoplastic resin and elastomer component is not particularly limited, but a screw extruder, kneader, Banbury type mixer, twin-screw kneader/extruder etc. may be used. Among these, a twin-screw kneader/extruder is preferably used for the kneading of the thermoplastic resin and elastomer and dynamic vulcanization of the elastomer component. Further, it is possible to use two or more types of kneaders and successively knead the same. As the condition of the melt-kneading, the temperature should be at least a temperature at which the thermoplastic resin melts. Further, the shear rate at the time of kneading is preferably 1000 to 7500 sec$^{-1}$. The overall kneading time is from 30 seconds to 10 minutes. When adding a vulcanization agent, the vulcanization time after addition is preferably from 15 seconds to 5 minutes.

When the compatibilities of the above specific thermoplastic resin and elastomer component differ, it is preferable to make the two compatible using a suitable compatibilizing material as a third component. By mixing a compatibilizing agent into the system, the surface tension of the thermoplastic resin and elastomer component falls and, as a result, the properties of the two components are more effectively expressed since the particle size of the rubber forming the dispersed layer becomes fine in size. As such a compatibilizing agent, in general it is possible to use a copolymer having both or one of the structures of the thermoplastic resin and elastomer component or one of the structure of a copolymer having an epoxy group, carboxy group, halogen group, amine group, oxazoline group, hydroxy group, etc. reactable with the thermoplastic resin or elastomer component. These may be selected according to the types of the thermoplastic resin and the elastomer component to be mixed, but as normally used ones, a styrene/ethylene-butylene block copolymer (SEBS) and its maleic acid modified form, EPDM, EPDM/styrene, or EPDM/acrylonitrile graft copolymer, and its maleic acid modified form, styrene/maleic acid copolymer, and reactive phenoxyne may be mentioned. The amount of the compatibilizing agent blended is not particularly limited, but preferably is 0.5 to 10 parts by weight per 100 parts by weight of the polymer component (sum of thermoplastic resin and elastomer component).

The ratio of composition between the specific thermoplastic resin component (A) and elastomer component (B)in the case of blending a thermoplastic resin and elastomer is not particularly limited and may be suitably determined by the Young's modulus and thickness of the shaped article, but the preferable range is a ratio by weight of 90/10 to 30/70, more preferably 70/30 to 30/70.

The polymer composition according to the present invention may have mixed into it, in addition to the above essential polymer component, compatibilizing agent polymers and other polymers to an extent not impairing the necessary properties of the tire use polymer composition of the present invention. The object of mixing the other polymers may be to improve the compatibility between the thermoplastic resin and elastomer component, improve the shapeability of the shaped article of the material, improve the heat resistance, and reduce costs. As the materials used for this, for example, polyethylene (PE), polypropylene (PP), polystyrene (PS), ABS, SBS, polycarbonate (PC), etc. may be mentioned. The polymer composition according to the present invention may have freely mixed in it a filler generally mixed into a polymer mixture (calcium carbonate, titanium oxide, alumina, etc.), carbon black, white carbon, and other reinforcing agents, softening agents, plasticizers, processing aids, pigments, dyes, antioxidants, etc. in so far as the requirements of the air permeation rate and Young's modulus are not impaired.

Further, it is also possible to dynamically vulcanize an elastomer component when mixing the elastomer component with the thermoplastic resin. The vulcanization agent, vulcanization aid, vulcanization conditions (e.g., temperature and time), and the like when dynamically vulcanizing the elastomer component may be suitably determined depending upon the composition of the elastomer component to be added and are not particularly limited.

As the cross-linking agent, a general rubber vulcanization agent (cross-linking agent) may be used. Specifically, as a sulfur vulcanization agent, powdered sulfur, precipitated sulfur, high dispersion sulfur, surface treated sulfur, insoluble sulfur, dimorpholine disulfide, alkylphenol disulfide, etc. may be mentioned. For example, 0.5 to 4 phr (parts by weight based upon 100 parts by weight of the rubber component (polymer)) or so may be used.

Further, as the organic peroxide vulcanization agent, benzoyl peroxide, t-butyl hydroperoxide, 2,4-bichlorobenzoyl peroxide, 2,5-dimethyl-2,5-di(t-butylperoxy)hexane, 2,5-dimethylhexane-2,5-di(peroxybenzoate), etc. may be illustrated. For example, 1 to 20 phr or so may be used.

Further, as the phenol resin vulcanization agent, a bromide of an alkylphenol resin, stannous chloride, chloroprene, or other halogen donor and alkylphenol resin mixed cross-linking systems etc. may be illustrated. For example, 1 to 20 phr or so may be used.

In addition, zinc oxide (5 phr or so), magnesium oxide (4 phr or so), lyserge (10 to 20 phr or so), p-quinone dioxime, p-dibenzoyl quinone dioxime, tetrachloro-p-benzoquinone, poly-p-dinitrosobenzene (2 to 10 phr or so), and methylene dianiline (0.2 to 10 phr or so) can be mentioned.

Further, optionally, a vulcanization accelerator may be added. As the vulcanization accelerator, an aldehyde・ammonia, guanidine, thiazole, sulfenamide, thiuram, dithio acid salt, thiourea, or other general vulcanization accelerator may be added in an amount of 0.5 to 2 phr or so, for example.

Specifically, as an aldehyde・ammonia vulcanization accelerator, hexamethylene tetramine, etc.; as a guanidine vulcanization accelerator, diphenyl guanidine etc.; as a thiazole vulcanization accelerator, dibenzoylthiazyl disulfide (DM), 2-mercaptobenzothiazole and their Zn salts, cyclohexyl amine salt, etc.; as a sulfenamide vulcanization accelerator, cyclohexylbenzothiazyl sulfenamide (CBS), N-oxydiethylene benzothiazyl-2-sulfenamide, N-t-butyl-2-benzothiazole sulfenamide, 2-(thymolpolynyldithio) benzothiazole, etc., as a thiuram vulcanization accelerator, tetramethyl thiuram disulfide (TMTD), tetraethyl thiuram disulfide, tetramethyl thiuram monosulfide (TMTM), dipentamethylene thiuram tetrasulfide, etc.; as a dithio acid salt vulcanization accelerator, Zn-dimethyl dithiocarbamate, Zn-diethyl dithiocarbamate, Zn-di-n-butyl dithiocarbamate, Zn-ethylphenyl dithiocarbamate, Te-diethyl dithiocarbamate, Cu-dimethyl dithiocarbamate, Fe-dimethyl dithiocarbamate, pipecoline pipecolyl dicarbamate, etc.; and as the thiourea vulcanization accelerator, ethylene thiourea, diethyl thiourea, etc. may be mentioned.

Further, as the vulcanization promoter, it is possible to use together a general rubber aid. For example, zinc oxide (5 phr or so), stearic acid or oleic acid and their Zn salts (2 to 4 phr or so) may be used.

The film thus obtained is structured as a matrix of a thermoplastic resin in which is dispersed an elastomer as a discontinuous phase. By adopting such a structure, it is possible to impart to the film a sufficient flexibility and sufficiently low air permeation property through the effect of the resin layer of the discontinuous phase and possible to obtain shapeability of the thermoplastic resin without regard as to the amount of the elastomer.

In another embodiment of the present invention, a tackifier/adhesive is coated on part of at least one of the air permeation preventive layer and its adjoining layer to increase the bonding strength between the layers and thereby prevent trouble in manufacture, such as rising, without regard as to the structure or material of the air permeation preventive layer and finishing layer of the bead portion. Note that the tackifier/adhesive is not particularly limited. Any one generally used in the past may be used in a thickness for example of 1 μm to 100 μm or so. This tackifier/adhesive has tackiness at the time of tire shaping, so facilitates the work. At the time of vulcanization of the tire, it is cross-linked by heat and has the action of causing a strong bond between the air permeation preventive layer and the tire members.

The tackifier/adhesive used in the present invention preferably is a tackifier/adhesive composition containing a surface polymer component of the air permeation preventive layer and a polymer component with a differece of critical surface tension ($\Delta\gamma c$) with the rubber component of the tire members of not more than 6 mN/m, preferably not more than 3 mN/m. The polymer constituting the main ingredient of the tackifier/adhesive is a general unvulcanized rubber, acrylic acid ester copolymer, polyether and polyester polyol, styrene copolymer, modified styrene copolymer, polyolefin, etc., more specifically, natural rubber, SBR, BR, IR, EPDM, and other unvulcanized rubbers, butyl acrylate, 2-ethylhexyl acrylate, ethyl acrylate, and other polymers obtained by polymerizing a monomer, copolymers of these and ethylene, polypropylene glycol, polyethylene glycol, polytetramethylene glycol, condensates of adipic acid with glycol and triol that is, ethylene adipate, butylene adipate, diethylene adipate, styrene-ethylene-butylene copolymer, styrene-ethylene-propylene copolymer, and these modified by imparting an epoxy group, carboxy group, amine group, anhydrous maleic acid group, etc.

As the cross-linking agent, it is possible to freely select in addition to a general rubber use vulcanization agent, an isocyanate cross-linking agent, amine group cross-linking agent, etc. depending upon the type of the polymer. Specifically, as a sulfur, powdered sulfur, precipitated sulfur, high dispersion sulfur, surface treated sulfur, insoluble sulfur, dimorpholine disulfide, alkylphenol disulfide, etc. in for example 1 to 4 phr (parts by weight based upon 100 parts by weight of the rubber, same below) or so; as the peroxide, for example, benzoyl peroxide, t-butyl hydroperoxide, 2,4-dichlorobenzoyl peroxide, 2,5-dimethyl-2,5-di(t-butylperoxy)hexane, 2,5-dimethylhexane-2,5-di(peroxybenzoate), etc. in for example 1 to 15 phr or so; and, as others, zinc oxide (5 phr or so), magnesium oxide (4 phr or so), lyserge (10 to 20 phr or so), p-quinone dioxime, p-dibenzoyl quinone dioxime, tetrachloro-p-benzoquinone, poly-p-dinitrosobenzene (2 to 10 phr or so), can be mentioned.

As the isocyanate component, it is possible to use any which cross-links by the heat at the time of vulcanization of the tire. Specifically, TDI, MDI, crude MDI, NDI, HDI, IPDI, etc. may be mentioned. The ratio of blending of the polyester polyol and isocyanate is preferably in the range of an index (-NCO/-OH x 100 =) 50 to 200. Outside of this range, the tackiness is poor, the bondability falls, and the tire members and thermoplastic film will no longer bond.

Further, as the vulcanization accelerator, it is possible to use a general rubber use vulcanization accelerator in, for example, an amount of 0.5 to 2 phr. Specifically, an aldehyde-ammonia (for example, hexamethylene tetramine), guanidine (for example, diphenyl guanidine), thiazole (for example, 2-mercaptobenzothiazole and its Zn salt, cyclohexylamine salt, dibenzothiazyl disulfide), sulfenamide (for example, cyclohexyl benzothiazyl sulfenamide, N-oxydiethylene benzothiazyl-2-sulfenamide, N-t-butyl-2-benzothiazole sulfenamide, 2-(thymol polynyl dithio)benzothizole), thiuram (for example, tetramethyl thiuram disulfide, tetraethyl thiuram disulfide, tetramethyl thiuram monosulfide, dipentamethylene thiuram tetrasulfide), salt of dithio acid (for example, Zn-dimethyl dithiocarbamate, Zn-diethyl dithiocarbamate, Zn-di-n-butyl dithiocarbamate, Zn-ethyl phenyl dithiocarbamate, Te-diethyl dithiocarbamate, Cu-dimethyl dithiocarbamate, Fe-dimethyl dithiocarbamate, pipecoline pipecolyl dithiocarbamate), thiourea (for example, ethylene thiourea, diethyl thiurea), etc. may be mentioned.

When the tackiness of the tackifier/adhesive is insufficient, it is possible to add a tackifier.

As a tackifier, it is possible to use any which is used for a general tackifier, adhesive, etc. in for example an amount of 10 to 100 phr or so. Specifically, for example, (a) rosin type resin (gum rosin, tall oil rosin, wood rosin, or other rosin; hydrogenated rosin, unequalized rosin, polymer rosin, maleated rosin, and other basic rosins); rosin glycerine ester (ester rubber), hydrogenated rosin • glycerine ester, and other rosin esters; and (b) terpene phenol resin and other resins having a polar group or resins not having a polar group, for example, a terpene resin mainly comprised of α-pinene, β-pinene, dipentene (limonene, etc.; aromatic hydrocarbon modified terpene resins and other natural substances and their derivatives and for example (c) aliphatic, alicyclic, aromatic, and other petroleum resins; (d) coumarone • indene resins; (e) styrene, substituted styrene, and other styrene resins and other polymer resins and for example (f) alkylphenol resins, rosin modified phenol resins, and other phenol resins; (g) xylene resin and other condensation resins may be mentioned.

As other components, when it is necessary to raise the bonding strength, it is also possible to partially mix into the tackifier/adhesive composition an additive reacting with the film material or a rubber material compatible with the film material or an additive having a critical surface tension closer to the film material or the rubber material compatible with the film material. When a nylon resin is used as the thermoplastic film material, it is possible to use as the additive a resorcine formalin resin, glycol uryl resin, etc. and when a polyester resin is used, it is possible to use isocyanate etc. The amount of the additive blended is preferably 0.5 to 10 parts by weight based upon 100 parts by weight of the polymer.

Further, when it is desired to color the tire, it is possible to blend in carbon, a coloring agent, etc.

The tackifier/adhesive of the present invention may be dissolved in advance in a solvent etc. and used to form a tackifier/adhesive layer by the method of coating on the bonding surface by a brush, spray, roller, etc., the method of applying it on the thermoplastic film by a dip roll coater, kiss roll coater, knife coater, etc., or, as a method not using a solvent, the method of coextrusion or lamination at the time of forming the thermoplastic film to prepare a double layer film.

As the solvent in the case of making a solvent family tackifier/adhesive, a general solvent may be used. As specific examples, an aromatic solvent (benzene, toluene, xylene, etc.), an aromatic aliphatic mixture (M.S.P., S.B.P., Swazol 100, Swazol 200, Benzolarrow 40, H.A.W.S., White Spirit, etc.), an aliphatic ester (rubber volatile oil, ethyl acetate, etc.), alcohol and ketone (methanol, acetone, methylethylketone, methyl isobutyl ketone), etc. may be mentioned. It is possible to select the specific solvent from among these solvents in accordance with the rate of evaporation. These solvents may be used in mixtures of two or more types. The amount of the solvent added may be determined depending upon the viscosity of the tackifier/adhesive. The viscosity is 10 cps to 1000 cps, preferably 50 to 500 cps. If the viscosity is less than 10 cps, the amount of coating is too low and the bonding force insufficient, while conversely if over 1000 cps, the handling becomes difficult at the time of coating.

EXAMPLES

The present invention will now be explained further by Examples and Comparative Examples, but the scope of the present invention is of course not limited to these Examples.

Examples I-1 to I-18 and Comparative Examples I-1 to I-9

Steel radial tires (size 165SR13) having air permeation preventive layers of the compositions shown in Table I-1 to I-6 were produced using polymer films composed of ordinary butyl rubber and the materials A to D for the air permeation preventive layers shown below. The following tests were carried out on these tires.

Material A

100 parts of SBR, 60 parts of carbon black HAF, 1 part of stearic acid, 10 parts of a petroleum hydrocarbon resin (Escorez 1102, Esso), and 10 parts of paraffin oil (Machine Oil 22, Showa Shell) were kneaded in a Banbury type mixer for rubber to prepare a master batch.

Next, a twin-screw kneader was used to knead 50 parts of nylon 6 (Amilan CM1041, Toray) and 90.5 parts of the above master batch to cause the rubber component to disperse in the resin component, then 1.5 parts of ZnO, 0.5 part of DM (Nocceler DM, Ouchi Shinko Chemical Industrial), and 0.3 part of sulfur were added to dynamically vulcanize the same and the result pelletized.

This was extruded by a T-die to form a film of a thickness of 0.1 mm. The air permeation coefficient of the film was $4.33 \times 10^{-12}$ cc • cm/cm$^2$ • sec • cmHg and the Young's modulus was 91 MPa.

Material B

A nylon 6/66 copolymer (Amilan CM6021, Toray) was formed into a film by a T-die extruder.

The film had a thickness of 0.05 mm, an air permeation rate of $0.84 \times 10^{-12}$ cc • cm/cm$^2$ • sec • cmHg, and a Young's modulus of 244 MPa.

Material C

25.2 parts of nylon 6 (Amilan CM1041, Toray), 37.8 parts of MXD6 nylon (Reny 6001, Mitsubishi Gas Petrochemical), 10.2 parts of nylon 6/66/610 (Amilan CM4001, Toray), and 27 parts of Br-(polyisobutyrene-P-methylstyrene) (EXXPRO 89-4, Exxon Chemical) were kneaded in a twin-screw kneader to cause the rubber to disperse in the resin component, then ZnO, zinc stearate, and stearic acid were added in amounts of 0.12 part, 0.6 part, and 0.3 part and the result dynamically vulcanized and pelletized.

This was extruded by a T-die to form a film of a thickness of 0.05 mm. The air permeation coefficient of the film was $0.63 \times 10^{-12}$ cc • cm/cm$^2$ • sec • cmHg and the Young's modulus was 317 MPa.

Material D

13 parts of nylon 6.66 (Toray, Amilan CM6041), 25 parts of nylon 11 (Atochem, Rilsan BMNO), and 50 parts of Br-(polyisobutyrene-P-methylstyrene) (EXXPRO 89-4, Exxon Chemical) were kneaded in a twin-screw kneader to cause the rubber to disperse in the resin component, then ZnO, zinc stearate, and stearic acid were added in amounts of 0.3 part, 1.2 part, and 0.6 part and the resultant mixture dynamically vulcanized and pelletized.

This was extruded by a T-die to form a film of a thickness of 0.10 mm. The air permeation coefficient of the film was $8.50 \times 10^{-12}$ cc • cm/cm$^2$ • sec • cmHg and the Young's modulus was 60 MPa.

The butyl rubber was a general butyl rubber with an air permeation coefficient of $55 \times 10^{-12}$ cc • cm/cm$^2$ • sec • cmHg and a Young's modulus of 15 MPa.

| Tackifier/Adhesive Used in Table I-5 | |
|---|---|
| | Percent blended |
| EEA ethylene ethyl acrylate copolymer DPDJ-6169 (Japan Unicar) | 100 |
| Quinton A-100 (Nippon Zeon) | 60 |
| Dicumyl peroxide | 1 |
| FEF black | 10 |
| Toluene | 400 |
| MEK | 100 |
| n-hexane | 100 |

In the above formulation, the EEA, Quinton A-100, FEF black were mixed by a kneader, then were stirred in a homogenizer (speed of 8000 rpm) in the toluene and other mixed solvents to prepare a tackifier/adhesive. Finally, the dicumyl peroxide was added and stirred in.

EP 0 842 793 A1

Table I-1

| | Comp. Ex. I-1 | Comp. Ex. I-2 | Comp. Ex. I-3 | Ex. I-1 | Ex. I-2 | Ex. I-3 | Ex. I-4 | Comp. Ex. I-4 |
|---|---|---|---|---|---|---|---|---|
| Air permeation preventive layer | Butyl rubber | Butyl rubber | A | A | B | C | A | A |
| Air permeation coefficient x $10^{-12}$ ($cc \cdot cm/cm^2 \cdot sec \cdot cmHg$) | 55 | 55 | 4.33 | 4.33 | 0.84 | 0.63 | 4.33 | 4.33 |
| Gauge of air permeation preventive layer (mm) | 0.50 | 0.10 | 0.10 | 0.10 | 0.05 | 0.05 | 0.10 | 0.10 |
| Gauge of tie rubber (mm) | 0.70 | None | None | None | None | None | None | None |
| Structural drawing of bead portion | Fig. 2(a) | Fig. 2(a) | Fig. 2(a) | Fig. 3 | Fig. 3 | Fig. 3 | Fig. 10 | Fig. 10 |
| Edge position of air permeation prevention material | Bead toe | Bead toe | Bead toe | Bead toe | Bead toe | Bead toe | h=25 mm | h=35 mm |
| Finishing material | Textile | Textile | Textile | Rubber | Rubber | Rubber | Rubber | Rubber |
| Presence of coating of tackifier/adhesive | None | None | None | None | None | None | None | None |
| Rate of pressure drop (%/month) | 3.0 | 6.1 | 1.5 | 1.5 | 0.63 | 0.49 | 1.5 | 1.5 |
| Presence of trouble at time of manufacture | None | None | Yes (rising of finish-ing layer) | None | None | None | None | Yes (wrink-ling due to wrap-ping back) |
| Mass (kg) | 7.0 | 6.4 | 6.4 | 6.4 | 6.4 | 6.4 | 6.4 | 6.4 |
| Notes | | Large air leak-age when butyl rubber of liner made thin-ner | Tendency for peeling at manufac-ture when finish-ing layer is hard | Trouble elimi-nated if rubber finish-ing layer used | | | | |

Table I-2

| | Comp. Ex. I-1 | Comp. Ex. I-3 | Ex. I-5 | Ex. I-6 | Ex. I-7 | Comp. Ex. I-5 | Comp. Ex. I-6 |
|---|---|---|---|---|---|---|---|
| Air permeation preventive layer | Butyl rubber | A | A | A | A | A | A |
| Air permeation coefficient $\times 10^{-12}$ (cc·cm/cm²·sec·cmHg) | 55 | 4.33 | 4.33 | 4.33 | 4.33 | 4.33 | 4.33 |
| Gauge of air permeation preventive layer (mm) | 0.50 | 0.10 | 0.10 | 0.10 | 0.10 | 0.10 | 0.10 |
| Gauge of tie rubber (mm) | 0.70 | None | None | None | None | None | None |
| Structural drawing of bead portion | Fig. 2(a) | Fig. 2(a) | Fig. 3 | Fig. 3 | Fig. 10 | Fig. 10 | Fig. 10 |
| Edge position of air permeation preventive material | Bead toe | Bead toe | Bead toe | Bead toe | h=25 mm | h=30 mm | h=25 mm |
| Finishing material | Textile | Textile | Textile | Textile | Textile | Textile | Textile |
| Cover factor A | 1159 | 1159 | 820 | 435 | 820 | 820 | 1159 |
| Average denier (d) | 840 | 840 | 420 | 210 | 420 | 420 | 840 |
| Average no. of ends (E/50 mm) | 40 | 40 | 40 | 30 | 40 | 40 | 40 |
| Presence of tackifier/adhesive | None | None | None | None | None | None | None |
| Rate of pressure drop (%/month) | 3.0 | 1.5 | 1.5 | 1.5 | 1.5 | 1.5 | 1.5 |
| Presence of trouble at manufacture | None | Yes (rising of finishing layer) | None | None | None | Yes (wrinkling due to wrapping back) | Yes (rising due to finishing layer) |
| Mass (kg) | 7.0 | 6.4 | 6.4 | 6.4 | 6.4 | 6.4 | 6.4 |
| Notes | | No good if finishing layer is hard | Finishing layer must be A=1000 or less. (A=0, rubber finishing layer -> Item 1(?) | | Wrinkling due to wrapping back when h greater than 25 mm if wrapped back at bead portion | | Even when h=25 mm, if finishing layer hard, peeling when wrapping back |

Table I-3

| | Comp. Ex. I-1 | Comp. Ex. I-3 | Ex. I-8 | Ex. I-9 |
|---|---|---|---|---|
| Air permeation preventive layer | Butyl rubber | A | A | A |
| Air permeation coefficient x $10^{-12}$ (cc $\cdot$ cm/cm$^2$ $\cdot$ sec $\cdot$ cm Hg) | 55 | 4.33 | 4.33 | 4.33 |
| Gauge of air permeation preventive layer (mm) | 0.50 | 0.10 | 0.10 | 0.10 |
| Gauge of tie rubber (mm) | 0.70 | None | None | None |
| Structural drawing of bead portion | Fig. 2(a) | Fig. 2(a) | Fig. 9 | Fig. 9 |
| Edge position of air permeation preventive material | Bead toe | Bead toe | Bead heel | Bead heel |
| Finishing material | Textile | Textile | Rubber | Textile |
| Presence of coating of tackifier/adhesive | None | None | None | None |
| Rate of pressure drop (%/month) | 3.0 | 1.5 | 1.5 | 1.5 |
| Presence of trouble at manufacture | None | Yes (rising of finishing layer) | None | None |
| Mass (kg) | 7.0 | 6.4 | 6.4 | 6.4 |

Table I-4

| | Comp. Ex. I-1 | Comp. Ex. I-3 | Comp. Ex. I-7 |
|---|---|---|---|
| Air permeation preventive layer | Butyl rubber | Butyl rubber | A |
| Air permeation coefficient x $10^{-12}$(cc·cm/cm$^2$·sec·cmHg) | 55 | 55 | 4.33 |
| Gauge of air permeation preventive layer (mm) | 0.50 | 0.10 | 0.10 |
| Gauge of tie rubber (mm) | 0.7 | None | None |
| Structural diagram of bead portion | Fig. 2(a) | Fig. 2(a) | Fig. 7 |
| Finishing material | Textile | Textile | Textile |
| Edge position of air permeation preventive layer | ht=0 mm bead toe | ht=0 mm bead toe | ht=-8 mm bead heel |
| Presence of coating of tackifier/adhesive | None | None | None |
| Rate of pressure drop (%/month) | 3.0 | X6.1 | 1.5 |
| Presence of trouble at manufacture | None | None | None |
| Damage to bottom end of air permeation preventive layer at rim assembly | None | None | Yes *3 |
| Presence of rim slipping | None | None | Yes |
| Presence of peeling of end of air permeation preventive layer after use | - | - | - |
| Mass (kg) | 7.0 | 6.4 | 6.4 |

*1: Tire sectional height SH = 135 mm
*2: Height measured in tire radial direction from bead toe of bead filler = 48 mm
*3: Large damage not withstanding use in practice
*4: Light damage of level not causing problem in practice
*5: Light damage not causing problem in practice

Table I-4 (Continued)

|  | Ex. I-10 | Ex. I-11 | Ex. I-12 | Ex. I-13 |
|---|---|---|---|---|
| Air permeation preventive layer | A | A | A | A |
| Air permeation coefficient x $10^{-12}$(cc·cm/cm$^2$·sec·cmHg) | 4.33 | 4.33 | 4.33 | 4.33 |
| Gauge of air permeation preventive layer (mm) | 0.10 | 0.10 | 0.10 | 0.10 |
| Gauge of tie rubber (mm) | None | None | None | None |
| Structural diagram of bead portion | Fig. 4 | Fig. 6 | Fig. 6 | Fig. 6 |
| Edge position of air permeation preventive layer | ht=0 mm bead toe ht/SH=0 | ht=2 mm ht/SH=0.01 | ht=5 mm ht/SH=0.04 | ht=20 mm ht/SH=0.15 *1 |
| Finishing material | Textile | Textile | Textile | Textile |
| Presence of tackifier/ adhesive | None | None | None | None |
| Rate of pressure drop (%/month) | 1.5 | 1.5 | 1.5 | 2.0 |
| Presence of trouble at manufacture | None | None | None | None |
| Damage to bottom end of air permeation preventive layer at rim assembly | Slight *4 | None | None | None |
| Presence of rim slipping | None | None | None | None |
| Presence of peeling of end of air permeation preventive layer after use | None | None | None | None |
| Mass (kg) | 6.4 | 6.4 | 6.4 | 6.4 |

*1: Tire sectional height SH = 135 mm
*2: Height measured in tire radial direction from bead toe of bead filler = 48 mm
*3: Large damage not withstanding use in practice
*4: Light damage of level not causing problem in practice
*5: Light damage not causing problem in practice

Table I-4 (Continued)

| | Ex. I-14 | Ex. I-15 | Comp. I-8 | Ex. I-16 |
|---|---|---|---|---|
| Air permeation preventive layer | A | A | A | D |
| Air permeation coefficient x $10^{-12}$ ($cc \cdot cm/cm^2 \cdot sec \cdot cmHg$) | 4.33 | 4.33 | 4.33 | 8.50 |
| Gauge of air permeation preventive layer (mm) | 0.10 | 0.10 | 0.10 | 0.10 |
| Gauge of tie rubber (mm) | None | None | None | None |
| Structural diagram of bead portion | Fig. 6 | Fig. 11 | Fig. 11 | Fig. 6 |
| Edge position of air permeation preventive layer | ht=24 mm 1/2 height of bead filler *2 ht/SH=0.18 | ht=40 mm ht/SH=0.30 | ht=50 mm ht/SH=0.37 Higher than height of bead filler *2 | ht=5 mm ht/SH=0.04 |
| Finishing material | Textile | Textile | Textile | Textile |
| Presence of coating of tackifier/adhesive | None | None | None | None |
| Rate of pressure drop (%/month) | 2.1 | 2.5 | 3.1 | 2.5 |
| Presence of trouble at manufacture | None | None | None | None |
| peeling of end of air permeation preventive layer after use | None | None | None | None |
| Presence of rim slipping | None | None | None | None |
| Presence of peeling of end of air permeation preventive layer after use | None | Slight *5 | Yes | None |
| Mass (kg) | 6.4 | 6.4 | 6.4 | 6.4 |

*1: Tire sectional height SH = 135 mm
*2: Height measured in tire radial direction from bead toe of bead filler = 48 mm
*3: Large damage not withstanding use in practice
*4: Light damage of level not causing problem in practice
*5: Light damage not causing problem in practice

Table I-5

| | Comp. Ex. I-1 | Comp. Ex. I-3 | Ex. I-17 |
|---|---|---|---|
| Air permeation preventive layer | Butyl rubber | A | A |
| Air permeation coefficient x $10^{-12}$ (cc $\cdot$ cm/cm$^2$ $\cdot$ sec $\cdot$ cmHg) | 55 | 4.33 | 4.33 |
| Gauge of air permeation preventive layer (mm) | 0.50 | 0.10 | 0.10 |
| Gauge of tie rubber (mm) | 0.70 | None | None |
| Structural diagram of bead portion | Fig. 2(a) | Fig. 2(a) | Fig. 2(a) |
| Edge position of air permeation preventive material | Bead toe | Bead toe | Bead toe |
| Finishing material | Textile | Textile | Textile |
| Presence of coating of tackifier/adhesive | None | None | Yes |
| Rate of pressure drop (%/month) | 3.0 | 1.5 | 1.5 |
| Presence of trouble at manufacture | None | Yes | None |
| Mass (kg) | 7.0 | 6.4 | 6.4 |

Table I-6

| | Comp. Ex. I-1 | Comp. Ex. I-3 | Ex. I-18 | Comp. Ex. I-19 |
|---|---|---|---|---|
| Air permeation preventive layer | Butyl rubber | A | A | A |
| Air permeation coefficient x $10^{-12}$ (cc $\cdot$ cm/cm$^2$ $\cdot$ sec $\cdot$ cmHg) | 55 | 4.33 | 4.33 | 4.33 |
| Gauge of air permeation preventive layer (mm) | 0.50 | 0.10 | 0.10 | 0.10 |
| Gauge of tie rubber (mm) | 0.70 | None | None | None |
| Structural diagram of bead portion | Fig. 2(a) | Fig. 2(a) | Fig. 11 | Fig. 11 |
| Edge position of air permeation preventive material | Bead toe (ht=0 mm) | Bead toe (ht=0 mm) | ht/SH=30% from height of bead toe | ht/SH=37% from height of bead toe |
| Height of finishing material hf (mm) | 25 | 25 | 25 | 25 |
| Finishing material | Textile | Textile | Textile | Textile |
| Presence of coating of tackifier/adhesive | None | None | None | None |
| Rate of pressure drop (%/month) | 3.0 | 1.5 | 2.5 | 3.1 |
| Presence of trouble at manufacture | None | Yes | None | None |

Table I-6 (continued)

|  | Comp. Ex. I-1 | Comp. Ex. I-3 | Ex. I-18 | Comp. Ex. I-19 |
|---|---|---|---|---|
| Mass (kg) | 7.0 | 6.4 | 6.4 | 6.4 |

Note that the test methods used for the evaluation of the examples and the comparative examples were as follows:

### Air Leakage Test Method (Rate of Pressure Drop)

Tires were assembled on rims of 13 x 41/2J and allowed to stand at an initial pressure of 200 kpa, room temperature of 21°C, and no load conditions for three months and the tire internal pressure measured every four days. The $\alpha$ value was found by recurrence by the following function:

$$Pt/Po = exp(-\alpha t)$$

where Pt is the measured pressure, Po is the initial pressure, and t is the number of days elapsed. Using the obtained $\alpha$ and substituting 30 (days) for t, the following is obtained:

$$\beta = [1-exp(-\alpha t)] \times 100$$

where $\beta$ is the rate of pressure drop per month (%/month).

### Judgement (or Incapability) of Trouble in Manufacture

Green tires were allowed to stand for 24 hours at ordinary temperature after shaping. The state of the air permeation preventive layer and finishing layer of the bead portion was checked and tires with peeling were judged as substandard.

[Method of Evaluation of Damage to Bottom End of Air Permeation Preventive Layer at Time of Assembly to Rim]

Tires were attached to and detached from a rim by a rim assembler repeatedly 10 times each and the presence of cracking or peeling of the end portion of the air permeation preventive layer was observed. Tires with no cracks were indicated as "none", tires with no peeling, cracks, etc. after three times, but having some peeling, cracks, etc. after seven times were indicated as "slight", and tires with cracks or peeling already after three repetitions were indicated as "yes".

[Method of Evaluation of Rim Slipping]

Tires were assembled onto a standard rim defined by JATMA standards, air filled in at a pressure of 200 kPa, and a reference line draw between an evaluation tire assembled on the rim and the rim so as to enable it to be understood when the tire and rim deviate in the circumferential direction. Each of the tires was then mounted on a 1500 cc displacement small-sized passenger car and rapidly braked on a dry road surface at a speed of 50 km/hr. This rapid braking was repeated three times straight, then it was examined if the reference line was deviated.

[Peeling of End Portion of Air permeation preventive layer After Use]

Air was filled at a pressure of 140 kPa using a standard rim defined by the JATMA standard. The tires were run on a drum of an outer diameter of 1700 mm at a room temperature of 38°C, a load of 300 kN, a speed of 80 km/h, and a distance of 10,000 km, then the presence of peeling of the end portions of the air permeation preventive layer after use was examined. At this stage, peeling was indicated as "yes". The tires were run over a further 10,000 km under the above conditions and the presence of peeling of the air permeation prevention layer after use again examined. When there was peeling of less than 2 mm, this was indicated as "slight". The case of no peeling at all was indicated as "none".

### Measurement Method of Cover Factor A of Finishing

(i) The finishing layer was sampled from the inside surface of the bead core of the tire, immersed in toluene to cause the rubber to swell, and the rubber removed. The cord was sampled from the result after removal of the rubber and the length and mass measured. This was converted to a denier and the denier found for the warp and weft averaged.

(ii) The count of cords in the range of a 50 mm width in the direction perpendicular to the cord direction is measured for each cord direction and the values averaged.

(iii) Next, the cover factor A is calculated.

$$A = \text{(Average denier number of cord contained in textile finishing layer)}^{0.5}$$
$$\times \text{(average count of cords per 50 mm width of textile finishing layer)}$$

Standard Example II-1, Examples II-1 to II-6, and Comparative Examples II-1 to II-3

A film comprising the following material is used as an air permeation preventive layer to produce a pneumatic tire including examples according to the first embodiment of the present invention of a tire size 165SR13 (rim size: 13 x 41/2-J).

The tires thus obtained were evaluated by the following methods as to their air leakage (rate of pressure drop), peeling of finishing, and productivity at time of shaping. The results are shown in Table I. Note that all parts of the material are parts by weight.

100 parts of SBR, 60 parts of carbon black HAF, 1 part of stearic acid, 10 parts of a petroleum hydrocarbon resin (Escolez 1102, Esso), and 10 parts of paraffin oil (Machine Oil 22, Showa Shell) were kneaded in a Banbury type mixer for rubber to prepare a master batch.

Next, a twin-screw kneader was used to knead 50 parts of nylon 6 (Amilan CM1041, Toray) and 90.5 parts of the above master batch to disperse the rubber component in the resin component, then 1.5 parts of ZnO, 0.5 part of DM (Nocceler DM, Ouchi Shinkyo Chemical Industrial), and 0.3 part of sulfur were added to dynamically vulcanize the same and the result and mixture was pelletized.

This was extruded by a T-die to form a film having a thickness of 0.1 mm. The air permeation coefficient of the film was $4.33 \times 10^{-12}$ cc $\cdot$ cm/cm$^2$ $\cdot$ sec $\cdot$ cmHg and the Young's modulus was 91 MPa.

Method of Measurement of Air Permeation Coefficient of Film

This was based on JIS K7126 "Gas Permeability Test Method for Plastic Film and Sheets (Method A)".

Test piece: Film samples prepared in individual examples used.
Test gas: Air ($N_2$:$O_2$ = 8:2)
Test temperature: 30°C

Air Leakage Test Method (Rate of Pressure Drop)

The sample was allowed to stand for three months at an initial pressure of 200 kpa, room temperature of 21°C, and no load conditions. The internal pressure was measured at intervals of four days. The a value was found by recurrence by the following equation:

$$Pt/Po = \exp(-\alpha t)$$

where Pt is the measured pressure, Po is the initial pressure, and t is the number of days elapsed. Using the calculated $\alpha$ and substituting 30 (days) for t, the following is obtained:

$$\beta = [1-\exp(-\alpha t)] \times 100$$

where $\beta$ is the rate of pressure drop per month (%/month).

Productivity at Time of Shaping (Shown by Two Levels)

Poor: Shaping possible, but mass production not practical, and Good: no problem in shaping.

Peeling of Finishing (Shown by Three Levels)

Poor: Complete peeling, Fair: Level able to withstand use, and Good: Bonded.

The results of evaluation are shown in Table II-1.

Table II-1

| | Standard Ex. | Comp. Ex. II-1 | Ex. II-1 | Ex. II-2 | Ex. II-3 |
|---|---|---|---|---|---|
| Air permeation coefficient x $10^{-12}$ (cc $\cdot$ cm/cm$^2$ $\cdot$ sec $\cdot$ cmHg) | 55 | 4.33 | 4.33 | 4.33 | 4.33 |
| Ratio of area of cutaways to area of film sandwiched between finishing and carcass | 0 | 0 | 3 | 5 | 30 |
| Rate of protrusion of cutaways (%) *1 | 0 | 0 | 0 | 0 | 0 |
| Rate of pressure drop (%/month) | 3.0 | Poor *4 | 1.5 | 1.5 | 1.5 |
| Cutaway shape | None | None | Pricking | Hole | Hole |
| Productivity at shaping *2 | Good | Good | Good | Good | Good |
| Peeling of finishing *3 | Good | Poor | Fair | Good | Good |
| Mass (kg) | 7.0 | 6.4 | 6.4 | 6.4 | 6.4 |
| | Ex. II-4 | Comp. Ex. II-2 | Ex. II-5 | Ex. II-6 | Comp. Ex. II-3 |
| Air permeation coefficient x $10^{-12}$ (cc $\cdot$ cm/cm$^2$ $\cdot$ sec $\cdot$ cmHg) | 4.33 | 4.33 | 4.33 | 4.33 | 4.33 |
| Ratio of area of cutaways to area of film sandwiched between finishing and carcass | 80 | 90 | 30 | 30 | 30 |
| Rate of protrusion of cutaways (%)*1 | 0 | 0 | 5 | 15 | 20 |
| Rate of pressure drop (%/month) | 1.6 | 1.6 | 1.9 | 2.7 | 3.1 |
| Cutaway shape | Hole | Hole | Hole | Hole | Hole |
| Productivity at shaping *1 | Good | Poor | Good | Good | Good |
| Peeling of finishing *1 | Good | Good | Good | Good | Good |
| Mass (kg) | 6.4 | 6.4 | 6.4 | 6.4 | 6.4 |

*1: The ratio of the area of the cutaway portions protruding from the finishing to the area of the inner surface of the tire is made the "rate of protrusion of cutaways".
*2: Levels of evaluation of productivity at shaping (two stages): Poor: Shaping possible, but mass production not practical. Good: No problem in shaping.
*3: Levels of evaluation of peeling of finishing (three stages): Poor: Complete peeling. Fair: Level able to withstand use. Good: Bonded.
*4: Rim assembly not possible and evaluation impossible due to complete peeling of finishing layer.

The standard example shows a general example of a conventional butyl liner (air permeation coefficient of 55 x $10^{-12}$ cc $\cdot$ cm/cm$^2$ $\cdot$ sec $\cdot$ cmHg). The linear gauge was 1.2 mm at both of the air permeation preventive layer and tie rubber.

Comparative Example II-1 shows the case where no cutaways are made in the film and shows that practical use cannot be withstood.

As opposed to this, Example II-1 shows the case of pricking. Even with this, the finishing layer will not peel off and practical use can be withstood. Further, Examples II-2 to II-4 show the cases where the ratios of the area of cutaways to the film area are 5%, 30%, and 80% and show that when the ratios are 5 to 80%, excellent results are obtained. Comparative Example II-2 shows the case where the ratio of the area of the cutaways is made 90%. If made large to this extent, the shaping becomes difficult and mass production cannot be withstood.

Examples II-5 to II-6 show that there is no problem even if the cutaways protrude if the rate of protrusion of the cutaways is in the range of not more than 15%. As opposed to this, as shown in Comparative Example II-3, if the rate of protrusion of the cutaways is over 15%, the air permeation rate deteriorates.

Examples II-7 to II-8 and Comparative Example II-4

Pneumatic tires including examples according to the second embodiment of the present invention of a tire size of 165SR13 (rim size: 13 x 41/2-J) using a film using the above material as an air permeation preventive layer were produced and evaluated in the same way as above. The results are shown in Table II-2.

As clear from the results of Example II-7 and II-8, if the overlap of the finishing layer and film is not more than 10 mm, peeling of the finishing layer is suppressed. It is even more preferable if the amount of overlap is less than 5 mm. If the amount of overlap is made 15 mm, the finishing ends up peeling as shown in Comparative Example II-4.

Table II-2

|  | Ex. II-7 | Ex. II-8 | Comp. Ex. II-4 |
|---|---|---|---|
| Air permeation coefficient x $10^{-12}$ (cc $\cdot$ cm/cm$^2 \cdot$ sec $\cdot$ cmHg) | 4.33 | 4.33 | 4.33 |
| Overlapping of finishing and film (mm) | 5 | 10 | 15 |
| Rate of pressure drop (%/month) | 1.5 | 1.5 | 1.5 |
| Productivity at shaping *1 | Good | Good | Good |
| Peeling of finishing *1 | Good | Fair | Poor |
| Mass (kg) | 6.4 | 6.4 | 6.4 |
| * See notes of Table II-1. | | | |

## INDUSTRIAL APPLICABILITY

A film resistant to the permeation of air is used to reduce the thickness and lighten the weight compared with the conventional air permeation preventive layer using butyl rubber. It is possible to obtain a light weight pneumatic tire by the structure and material of the air permeation preventive layer and finishing layer without causing the manufacturing trouble caused at the bead portion due to the insufficient tack of the conventional film and the rigidity of the finishing layer. Further, according to the present invention, it is possible to obtain a light weight tire with a good productivity without impairing the resistance to air leakage and the rolling resistance and without the occurrence of peeling at the film layer between the finishing layer and carcass layer.

## LIST OF REFERENCES

| 1 | bead core portion |
|---|---|
| 2 | carcass layer |
| 3 | tread portion |
| 4 | belt layer |
| 5 | air permeation preventive layer |
| 6 | side wall |
| 7 | finishing layer |
| 8 | textile finishing layer or rubber finishing layer with cover factor A larger than 0 and not more than 1000 |
| 9 | bead toe portion |
| 10, 10', 10", 10''' | shapes of end portions of air permeation preventive layer in tire width direction |
| 11 | bead hill portion |
| 12 | cutaway portion |
| 13 | region of overlap of cutaway portion and finishing layer |
| 14 | example of cutaway due to pricking of end portion of air permeation preventive layer in tire width direction |
| 15 | example of cutaway due to holes of any shape at end portion of air permeation preventive layer in tire width direction |
| 16 | example of cutaway at end portion of air permeation preventive layer in tire width direction |

**Claims**

1. A pneumatic tire having an air permeation preventive layer comprising a film of a thermoplastic elastomer composition having an air permeation coefficient of not more than $25 \times 10^{-12}$ (cc $\cdot$ cm/cm$^2$ $\cdot$ sec $\cdot$ cmHg) and containing a thermoplastic resin or a blend of a thermoplastic resin and an elastomer and substantially covering the inner surface of the tire and providing a finishing layer of rubber so as to sandwich the air permeation preventive layer with a tire carcass layer.

2. A pneumatic tire having an air permeation preventive layer comprising a film of a thermoplastic elastomer composition having an air permeation coefficient of not more than $25 \times 10^{-12}$ (cc $\cdot$ cm/cm$^2$ $\cdot$ sec $\cdot$ cmHg) and containing a thermoplastic resin or a blend of a thermoplastic resin and an elastomer and substantially covering the inner surface of the tire and providing a textile finishing layer of a cover factor A of more than 0 and not more than 1000, defined by the following equation:

   A = (Average denier number of cord burried in textile finishing layer)$^{0.5}$ x (average count numbers of cords per 50 mm width of textile finishing layer ) so as to sandwich the air permeation preventive layer with a tire carcass layer.

3. A pneumatic tire having an air permeation preventive layer comprising a film of a thermoplastic elastomer composition having an air permeation coefficient of not more than $25 \times 10^{-12}$ (cc $\cdot$ cm/cm$^2$ $\cdot$ sec $\cdot$ cmHg) and containing a thermoplastic resin or a blend of a thermoplastic resin and an elastomer and substantially covering the inner surface of the tire and having a finishing layer sandwiched between a tire carcass layer and the air permeation preventive layer.

4. A pneumatic tire as claimed in claim 3, wherein the ratio of the height ht of the end portion of the air permeation preventive layer measured from the bead toe portion in the tire diametrical direction to the cross-sectional height SH of the tire is 0 to 30%.

5. A pneumatic tire having an air permeation preventive layer comprising a film of a thermoplastic elastomer composition having an air permeation coefficient of not more than $25 \times 10^{-12}$ (cc $\cdot$ cm/cm$^2$ $\cdot$ sec $\cdot$ cmHg) and containing a thermoplastic resin or a blend of a thermoplastic resin and an elastomer and substantially covering the inner surface of the tire, having an end portion of the air permeation preventive layer in the radial direction sandwiched between a finishing layer and a carcass layer, and having an end portion of the air permeation preventive layer in the radial direction positioned inside of the bead core in the tire diametrical direction.

6. A pneumatic tire having an air permeation preventive layer comprising a film of a thermoplastic elastomer composition having an air permeation coefficient of not more than $25 \times 10^{-12}$ (cc $\cdot$ cm/cm$^2$ $\cdot$ sec $\cdot$ cmHg) and containing a thermoplastic resin or a blend of a thermoplastic resin and an elastomer and substantially covering the inner surface of the tire, having the air permeation preventive layer and a finishing layer overlap in the radial direction, and having a tackifier/adhesive coated at a part of at least one of the air permeation preventive layer and its adjoining layer.

7. A pneumatic tire having an air permeation preventive layer comprising a film of a thermoplastic elastomer composition having an air permeation coefficient of not more than $25 \times 10^{-12}$ (cc $\cdot$ cm/cm$^2$ $\cdot$ sec $\cdot$ cmHg) and containing a thermoplastic resin or a blend of a thermoplastic resin and an elastomer and substantially covering the inner surface of the tire, not having the air permeation preventive layer and a finishing layer directly overlap, and having the ratio of the height ht of the end portion of the air permeation preventive layer measured from the bead toe portion in the tire diametrical direction to the sectional height SH of the tire of not more than 30%.

8. A pneumatic tire having, as an air permeation preventive layer, a film of a thermoplastic elastomer composition comprising having an air permeation coefficient of not more than $25 \times 10^{-12}$ (cc $\cdot$ cm/cm$^2$ $\cdot$ sec $\cdot$ cmHg) and a thermoplastic resin or a blend of a thermoplastic resin and an elastomer and structured with a film sandwiched between a carcass layer and a finishing layer in the bead portion, said pneumatic tire having a portion where at least a part of the film sandwiched between the carcass layer and the finishing layer is cut away and the finishing layer and the carcass layer are directly bonded.

9. A pneumatic tire as set forth in claim 8, wherein the film sandwiched between the finishing layer and the carcass layer is cut away at an area of 5 to 80% of the area of the film sandwiched between the finishing layer and the carcass layer.

10. A pneumatic tire using for an air permeation preventive layer a film of a thermoplastic elastomer composition comprised of a thermoplastic resin with an air permeation coefficient of not more than $25 \times 10^{-12}$ $(cc \cdot cm/cm^2 \cdot sec \cdot cmHg)$ or a blend of the thermoplastic resin and an elastomer and structured with a film sandwiched between a carcass layer and finishing layer in the bead portion, wherein the amount of overlap between the finishing layer and the film is not more than 10 mm.

# Fig.1

Fig.2(a)  Fig.2(b)  Fig.2(c)

Fig.3

Fig. 4

Fig. 5

Fig. 6

Fig. 7

Fig. 8(a)

CIRCUMFERENTIAL
DIRECTION

WIDTH
DIRECTION

5

10'

Fig. 8(b)

5

10'

Fig. 8(c)

5

10"

Fig. 8(d)

5

10'''

# Fig.9

# Fig.10

# Fig.11

Fig.12

Fig.13

Fig.14

Fig.15

# Fig.16

12

13        13

# Fig.17(a)

12

13        13

# Fig.17(b)

12

13        13

EP 0 842 793 A1

# Fig.18(a)    Fig.18(b)    Fig.18(c)

Fig.19(a)　Fig.19(b)　Fig.19(c)　Fig.19(d)　Fig.19(e)　Fig.19(f)

EP 0 842 793 A1

# Fig.20(a)   Fig.20(b)

<div align="center">

**INTERNATIONAL SEARCH REPORT**

</div>

| | International application No. |
|---|---|
| | PCT/JP97/01568 |

| A. CLASSIFICATION OF SUBJECT MATTER |
|---|
| Int. Cl$^6$  B60C5/14, B60C1/00 |

According to International Patent Classification (IPC) or to both national classification and IPC

| B. FIELDS SEARCHED |
|---|
| Minimum documentation searched (classification system followed by classification symbols) |
| Int. Cl$^6$  B60C5/14, B60C1/00 |

Documentation searched other than minimum documentation to the extent that such documents are included in the fields searched

| Jitsuyo Shinan Koho | 1926 – 1997 |
|---|---|
| Kokai Jitsuyo Shinan Koho | 1971 – 1996 |
| Toroku Jitsuyo Shinan Koho | 1995 – 1997 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP, 07-149108, A (Sumitomo Rubber Industries, Ltd.), June 13, 1995 (13. 06. 95)(Family: none) | 1 – 10 |
| A | JP, 07-40702, A (Sumitomo Rubber Industries, Ltd.), February 10, 1995 (10. 02. 95)(Family: none) | 1 – 10 |
| A | JP, 06-40207, A (The Yokohama Rubber Co., Ltd.), February 15, 1994 (15. 02. 94)(Family: none) | 1 – 10 |
| A | JP, 05-169907, A (The Yokohama Rubber Co., Ltd.), July 9, 1993 (09. 07. 93)(Family: none) | 1 – 10 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| August 5, 1997 (05. 08. 97) | August 19, 1997 (19. 08. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)